# EUROPÄISCHE PATENTSCHRIFT

(11) **EP 1 018 101 B1**
(45) Veröffentlichungstag und Bekanntmachung des Hinweises auf die Patenterteilung: **11.04.2001**
(21) Anmeldenummer: 99927828.6
(22) Anmeldetag: 01.06.1999
(51) Int. Cl.: G09F 9/30

(54) **FLACHBILDSCHIRM**
FLAT DISPLAY SCREEN
ECRAN PLAT

(30) Priorität: 02.06.1998 DE 19824618; 11.02.1999 DE 19905599
(43) Veröffentlichungstag der Anmeldung: 12.07.2000
(73) Patentinhaber: Glätzer, Rainer, 45886 Gelsenkirchen (DE)
(72) Erfinder: GLÄTZER, Rainer, D-45886 Gelsenkirchen (DE); GLÄTZER, Maik, D-45886 Gelsenkirchen (DE)
(74) Vertreter: Schneiders, Josef, Dipl.-Ing.
(86) Internationale Anmeldenummer: EP9903796
(87) Internationale Veröffentlichungsnummer: WO9963508

(56) Entgegenhaltungen:
- EP-A- 0 422 777
- DE-A- 19 540 363
- US-A- 4 747 648

## Beschreibung

Die Erfindung betrifft einen Flachbildschirm zur Darstellung eines Bildes mittels einer Vielzahl von matrixförmig angeordneten Bildpunkten, bei welchem Gruppen von Bildpunkten zu untereinander gleichartigen Anzeigemodulen zugefaßt sind, die gemeinsam den Flachbildschirm bilden und jeweils über flexible oder teilflexible Lichtwellenleiter mit einer zu jedem Anzeigemodul gehörenden Lichtquelle verbunden sind, wobei in die zu jedem Anzeigemodul führenden Lichtwellenleiter eine Lichtmodulatorenanordnung eingeschaltet ist.

Ein derartiger Flachbildschirm ist beispielsweise aus der US-4 747 648 A bekannt. Bei diesem vorbekannten Flachbildschirm sind die zu Anzeigemodulen zusammengefaßten Bildpunkte einerseits und die Anzeigemodule andererseits jeweils in Rahmen angeordnet, so daß sich eine von horizontalen und vertikalen Linien unterbrochene Endbetrachtungfläche ergibt. Als Lichtquelle werden Glühlampen verwendet. Für die Modulation wird der von den Glühlampen ausgehende kontinuierliche Lichtstrom durch entsprechend bewegliche Blenden ganz oder teilweise unterbrochen.

Weiterhin ist aus der EP-0 422 777 A1 ein Flachbildschirm bekannt, bei dem als Lichtquelle Halbleiterlichtquellen (LED) verwendet werden, deren Licht über optische Wellenleiter zu einem aus einer Glasplatte bestehenden Flachbildschirm geführt wird. Die Ansteuerung der einzelnen Bildpunkte auf diesem Flachbildschirm erfolgt über optische Demultiplexer.

Ein anderer Flachbildschirm ist aus der DE-PS 195 40 363 bekannt. Bei diesem bekannten Flachbildschirm sind die optischen Wellenleiter gitterförmig an der Rückseite des Flachbildschirmes angeordnet und haben entlang ihrer Längsausdehnung gleichmäßig verteilt angeordnete Auskoppelstellen. Somit bilden die Auskoppelstellen eine matrixförmige Anordnung von Bildpunkten. Jeweils ein Ende jedes Wellenleiters ist mit einer Halbleiterlichtquelle verbunden. Die Lichtquellen oder die Auskoppelstellen sind so ansteuerbar, daß sie Licht einer Farbe oder verschiedenfarbiges Licht abstrahlen. Durch eine schnelle zeitliche Aneinanderreihung der aus den Auskoppelstellen nacheinander in den Betrachtungsraum austretenden Lichtanteile unterschiedlicher Intensität entsteht im Auge der Eindruck eines Bildes, das im Falle der Farbmodulation bunt ist. Die erforderliche Lichtmodulation erfolgt entweder an den Halbleiterlichtquellen selbst oder mittels Modulatoren, die den einzelnen Auskoppelstellen zugeordnet sind, d. h. also ebenfalls matrixförmig verteilt angeordnet sind.

Ein wesentlicher Nachteil dieses vorbekannten Flachbildschirmes besteht darin, daß die optischen Wellenleiter in Bezug zueinander und in Bezug auf den Bildschirm ortsfest angeordnet sind, so daß der Flachbildschirm zwangsläufig eine feste äußere Form hat und behalten muß, die nicht veränderbar ist. Ein weiterer wesentlicher Nachteil besteht darin, daß eine Vielzahl von Auskoppelstellen seriell hintereinander entlang jedem Wellenleiter angeordnet sind, so daß an jeder Auskoppelstelle entweder nur ein kleiner Bruchteil des eingestrahlten Lichts abgestrahlt werden kann oder die Abstrahlung der vollen Lichtmenge nur in größeren zeitlichen Abständen möglich ist. Ein weiterer Nachteil besteht schließlich darin, daß die den Lichtaustritt an den Auskoppelstellen modulierenden Modulatoren dem engen Raster der Matrix entsprechend eng angeordnet werden müssen, woraus sich Probleme im Hinblick auf die enge Anordnung der Ansteuerleitungen und im Hinblick auf die Abfuhr von Verlustwärme ergeben.

Es ist Aufgabe der Erfindung, einen modular aufgebauten Flachbildschirm ohne störende horizontale und vertikale Trennungslinien und mit hohem Kontrast zu schaffen.

Zur Lösung dieser Aufgabe schlägt die Erfindung ausgehend von einem Flachbildschirm der eingangs genannten Art vor,
- daß die an der Vorderseite der Anzeigemodule befindlichen, zusammengefügten Bildpunkte jeweils eine randlose Endbetrachtungsfläche des Anzeigemoduls bilden,
- daß die einzelnen Anzeigemodule unmittelbar aneinander angrenzen, so daß sich eine auf der Sichtseite ununterbrochene Endbetrachtungsfläche des Flachbildschirmes ergibt
- und daß die zu jedem Anzeigemodul gehörenden Lichtquellen als Halbleiterlichtquellen ausgebildet sind, die gepulstes Licht abstrahlen.

Durch den modularen Aufbau des Bildschirmes aus verhältnismäßig kleinen, randlosen Anzeigemodulen, in denen eine Gruppe von Bildpunkten, beispielsweise 400 Bildpunkte zusammengefaßt ist, ist es möglich, eine im Aufbau variable, ununterbrochene Endbetrachtungsfläche zu schaffen. Dadurch, daß jedes Anzeigemodul seine eigene Lichtquelle hat und jedem Modul aufgrund des gepulsten Lichtstromes ohne Erhöhung der Versorgungsleistung eine erhöhte Lichtleistung zur Verfügung gestellt werden kann, ergeben sich eine außerordentlich hohe Leistungsdichte über die Fläche des gesamten Flachbildschirmes und dementsprechend ein besonders kontrastreiches Bild.

Als Halbleiterlichquellen werden vorzugsweise LED oder Diodenlaser verwendet, wobei die Halbleiterlichtquellen für jedes Anzeigemodul mindestens 3 LED oder 3 Diodenlaser in den Farben rot, grün und blau aufweisen. Solche Halbleiterlichtquellen zeichnen sich durch eine sehr hohe Leuchtdichte aus und können auf einfache Weise gesteuert werden.

Für die Modulation des Lichtstromes können unterschiedliche, bekannte Modulatorenanordnungen verwendet werden, beispielsweise LCD, elektrostatische, elektroakustische oder mechanische Modulatoren.

Die Erfindung macht es aber auch möglich, für diesen Flachbildschirm erstmals optische Keramiken als Modulatoren einzusetzen, bei denen das Verhältnis zwischen aktiver und passiver Fläche schlecht ist, weil zwischen den modulierten Flächen große Abstände eingehalten werden müssen. Eine vorteilhafte Weiterbildung der Erfindung sieht deshalb vor, daß die Modulatorenanordnungen jeweils als PLZT-Festkörper-Array mit einer Vielzahl von Modulationszellen und einer ITO-Ansteuerung ausgebildet sind. Bei PLZT handelt es sich um eine elektrooptische Oxidkeramik auf der Basis von Blei-Lanthan-Zirkonat-Titanat, deren aktive Flächen mittels ITO-Elektroden ansteuerbar sind. Bei ITO handelt es sich um einen Oxidhalbleiter auf der Basis von Indiumoxid und Zinnoxid. Ein solches PLTZ-Festkörper-Array mit ITO-Ansteuerung arbeitet verlustarm, effizient und praktisch verschleißfrei. Der Nachteil eines solchen Festkörper-Modulators, der im wesentlichen in der Einhaltung großer Abstände zwischen den aktiven Schaltflächen liegt, spielt beim Flachbildschirm gemäß der Erfindung wegen der beweglichen und beliebigen Anordnung der Lichtwellenleiter keine Rolle.

Gegebenenfalls kann pro Anzeigemodul ein PLZT-Festkörper-Array vorgesehen sein, dessen Modulationszellen zeitlich versetzt die Farben rot, grün und blau schalten. Bei dieser Anordnung kommt man pro Anzeigemodul mit einem einzigen PLZT-Festkörper-Array aus.

Alternativ können pro Anzeigemodul auch drei PLZT-Festkörper-Arrays vorgesehen sein, die parallel ansteuerbar sind und von denen jedes eine Farbe Rot, Grün oder Blau schaltet. Bei dieser Anordnung wird die erforderliche Schaltfrequenz um den Faktor 3 geringer.

Zweckmäßig ist weiterhin vorgesehen, daß die Anzeigemodule in einem Bildschirmrahmen angeordnet sind, der eine Vielzahl von matrixförmig angeordneten Modulaufnahmen aufweist. Ein solcher Bildschirmrahmen gestattet es, die einzelnen Anzeigemodule schnell und einfach zu einem Flachbildschirm zusammenzusetzen.

Zweckmäßig sind die Anzeigemodule in die Modulaufnahmen des Bildschirmrahmens einrastbar. Hierdurch können die einzelnen Anzeigemodule schnell montiert und ggf. auch wieder demontiert werden, beispielsweise um ausgetauscht oder in der Anordnung verändert zu werden.

Alternativ ist natürlich möglich, die in dem Bildschirmrahmen angeordneten Anzeigemodule miteinander und/oder mit den Modulaufnahmen des Bildschirmrahmens zu verkleben.

Um bestimmte Betrachtungseffekte zu erzielen, kann es unter Umständen zweckmäßig sein, die einzelnen Bildpunkte mit einer optischen Folie abzudecken, von denen das Licht in einer bestimmten Richtung oder Winkel abgestrahlt wird.

Eine zweckmäßige Weiterbildung der Erfindung sieht vor, daß eine Vielzahl von Bildpunkten zur Bildung eines Anzeigemoduls nebeneinander auf eine optische Folie aus verformbarem Material aufgeklebt sind. Hierdurch bleibt das Modul in sich verformbar, so daß es möglich ist, Flachbildschirme mit beliebig geformten Oberflächen herzustellen.

Gegebenenfalls können die Bildpunkte der Arizeigemodule auch unmittelbar von den Endflächen der beweglich bleibenden Lichtleitfasern gebildet werden. In diesem Falle ergibt sich ebenfalls eine frei gestaltbare Bildschirmoberfläche, die den verschiedensten Gesichtspunkten Rechnung tragen.

Die Bildpunkte können ggf. auch jeweils aus transparenten, pyramidenstumpfförmigen Festkörpern bestehen, in die von einer Seite her die Lichtwellenleiter einmünden und die an der gegenüberliegenden Seite mit einer lichtstreuenden Oberfläche versehen sind. Zur Bildung eines Anzeigemoduls aus solchen Bildpunkten kann eine Vielzahl von solchen Festkörpern mit geeigneten Hilfsmitteln zusammengefügt werden.

Schließlich ist es auch möglich, daß die Bildpunkte eines Anzeigemoduls nebeneinander auf einer transparenten Platte angeordnet sind, wobei in dieser Platte von einer Seite her und für jeden Bildpunkt gesondert Lichtwellenleiter einmünden, während die Platte an der gegenüberliegenden Seite mit einer lichtstreuenden Oberfläche versehen ist. Diese Platte mit den angeschlossenen Lichtwellenleitern bildet dann das Anzeigemodul.

Um den Flachbildschirm gemäß der Erfindung zusätzlich gegen mechanische Beschädigungen oder Erschütterungen unempfindlich zu machen, können die flexiblen oder teilflexiblen Lichtwellenleiter nach ihrer Zuordnung und der dreidimensionalen Anordnung ganz oder teilweise in eine aushärtende Masse eingebettet werden.

Gegebenenfalls können die Lichtwellenleiter im Bereich zwischen den Halbleiterlichtquellen und den Lichtmodulatorenanordnungen jeweils von einem Festkörper gebildet werden, der eine die Lichtwellenleiter bildende dreidimensionale lichtleitende Struktur aufweist. Diese Festkörper können beispielsweise aus durchsichtigem Glas, einem durchsichtigen Polymer oder ähnlichen Stoffen bestehen, in deren Volumen durch entsprechende physikalische Behandlung lichtleitende Strukturen als Lichtwellenleiter ausgebildet werden. Falls diese Festkörper verwendet werden, muß natürlich die räumliche Lage der Halbleiterlichtquellen einerseits und der Lichtmodulatorenanordnungen andererseits vorher entsprechend definiert werden.

Ausführungsbeispiele der Erfindung werden im folgenden anhand der Zeichnung näher erläutert. Es zeigen:
- Fig. 1:: einen Bildpunkt in vertikalem Schnitt, stark vergrößert;
- Fig. 2:: die stark vergrößerte Ansicht der Endbetrachtungsfläches eines Anzeigemoduls, welches aus einer Vielzahl von Bildpunkten zusammengesetzt ist;
- Fig. 3:: die gleiche Ansicht wie Fig. 2, jedoch in Originalgröße;
- Fig. 4:: perspektivisch/schematisch ein Anzeigemodul und dessen Anordnung in einem den Flachbildschirm umgebenden Rahmen;
- Fig. 5:: perspektivisch/schematisch die Lichtversorgung und Ausbildung eines Anzeigemodules in einer ersten Ausführungsform;
- Fig. 6:: perspektivisch/schematisch die Lichtversorgung und die Ausbildung eines Anzeigemoduls in einer zweiten Ausführungsform;
- Fig. 7:: perspektivisch/schematisch die Lichtversorgung und die Ausbildung eines Anzeigemoduls in einer dritten Ausführungsform;
- Fig. 8:: perspektivisch/schematisch die Lichtversorgung und die Ausbildung eines Anzeigemoduls ein einer vierten Ausführungsform;
- Fig. 9:: schematisch im Schnitt die Ausbildung und Anordnung eines Anzeigemoduls in einer fünften Ausführungsform.
- Fig. 10:: schematisch im Schnitt die Ausbildung eines Bildpunktes in einer gegenüber der Fig. 1 abgewandelten Ausführungsform;
- Fig. 11:: schematisch im Schnitt die Ausbildung eines Anzeigemoduls in einer weiterhin abgewandelten Ausführungsform.

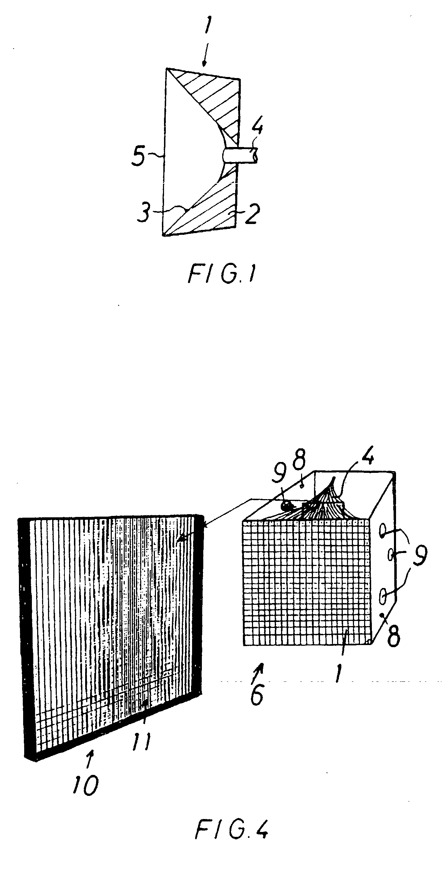

In Fig. 1 ist ein Bildpunkt in seiner Gesamtheit mit dem Bezugszeichen 1 bezeichnet. Der Bildpunkt 1 weist einen Bildpunkttragkörper 2 auf, der an seiner Sichtseite mit einem konkaven Reflektor 3 versehen ist, an dessen tiefster Stelle ein optischer Wellenleiter in Form einer Lichtleitfaser 4 ausmündet. Auf der Sichtseite ist der Reflektor 3 von einer optischen Folie 5 abgedeckt, mit deren Hilfe das Austrittsende der Lichtleitfaser 4 über die Sichtfläche gleichmäßig verteilt abgebildet wird. Dabei kann die optische Folie 5 bevorzugte Abstrahlwinkel aufweisen.

Der Bildpunkttragkörper 2 ist nach hinten pyramidenstumpfförmig verjüngt ausgebildet, so daß bei matrixförmiger Aneinanderreihung der Bildpunkte neben- und übereinander zwischen den einzelnen Bildpunkttragkörper 2 Freiräume verbleiben, die sich nach hinten keilförmig erweitern und zur Aufnahme von Verbindungsmitteln z. B. in Form eines geeignete Klebers dienen.

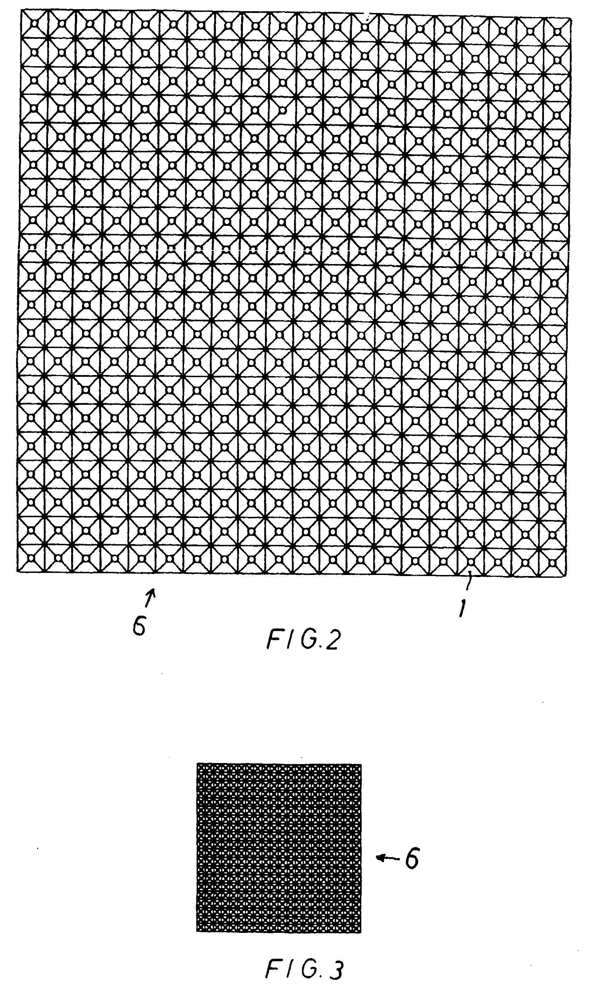

Eine große Anzahl, z. B. 400, von solchen neben- und übereinander angeordneten Bildpunkten 1 sind zu einem Anzeigemodul 6 zusammengefügt (vgl. Fig. 2 und 3). Die zusammengefügten Bildpunkte 1 befinden sich an der Vorderseite des Anzeigemoduls 6 und bilden dort gemeinsam die quadratische, randlose Endbetrachtungsfläche des Anzeigemoduls 6. Hinter dieser Endbetrachtungsfläche 7 des Anzeigemoduls 6 weist das Anzeigemodul 6 einen Modultragkörper 8 auf, der sich nach hinten pyramidenstumpfförmig verjüngt und im Bereich seiner Seitenwände mit Rastlöchern 9 versehen ist.

Zur Zusammenfügung einer großen Anzahl (z. B. 1200) von Anzeigemodulen 6 zu einem Flachbildschirm ist ein Bildschirmrahmen 10 vorgesehen, der mit einer entsprechenden Anzahl von matrixförmig angeordneten Modulaufnahmen 11 versehen ist. In diese Modulaufnahmen 11 sind die einzelnen Anzeigemodule 6 unmittelbar aneinandergrenzend einsetzbar und fixierbar, so daß sich auf der Sichtseite eine ununterbrochene Endbetrachtungsfläche ergibt. Die Fixierung der einzelnen Anzeigemodule 6 in den Modulaufnahmen 11 erfolgt dadurch, daß entsprechende Rastvorsprünge in den Modulaufnahmen 11 in die Rastlöcher 9 der Modulträger 8 einrasten. Alternativ können auch die keilförmigen Zwischenräume zwischen den benachbarten Modulkörpern 8 mit einem geeigneten Kleber gefüllt werden. Ebenso können die einzelnen Modulkörper 8 mit den Modulaufnahmen 11 des Bildschirmrahmens 10 verklebt werden.

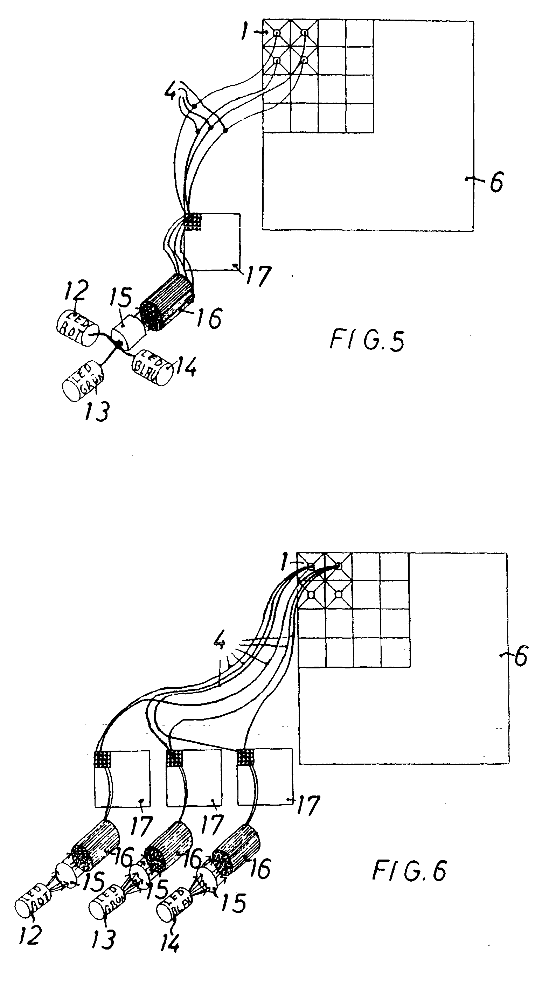

Die Bildpunkte 1 werden von Halbleiterlichtquellen 12 und 13 und 14 mit Licht versorgt (vgl. Fig. 5 - 8). Diese Halbleiterlichtquellen arbeiten vorzugsweise mit einer hohen Frequenz gepulst.

Wie aus Fig. 5 ersichtlich ist, wird das von den Halbleiterlichtquellen 12, 13, 14 abgestrahlte Licht zunächst einer Optik 15 für die Homogenisierung des Lichtstromes zugeführt und von dort in ein flexibles oder halbflexibles Lichtleitfaserbündel 16 mit 400 Einzelfasern eingespeist und von diesem einer Lichtmodulatorenanordnung 17 zugeführt. Die Lichtmodulatorenanordnung 17 ist bei allen Ausführungsbeispielen als PLZT-Festkörper-Array mit ITO-Ansteuerung ausgeführt und weist insgesamt 400 Modulationszellen auf. Jede Modulationszelle der Lichtmodulatorenanordnung 17 ist an eine Lichtleitfaser aus dem Lichtleitfaserbündel 16 angeschlossen. Von jeder Modulationszelle der Lichtmodulationsanordnung 17 führen Lichtleitfasern 4 zu den einzelnen Bildpunkten 1, wobei auch hier die einzelnen Lichtleitfasern 4 - zumindest über einen Teil der Länge - zu einem flexiblen oder teilflexiblen Lichtleitfaserbündel zusammengefaßt werden können.

Bei dieser Ausbildung des Anzeigemoduls 6 und der Lichtversorgung werden die Farben Rot, Grün und Blau zeitlich aufeinanderfolgend moduliert.

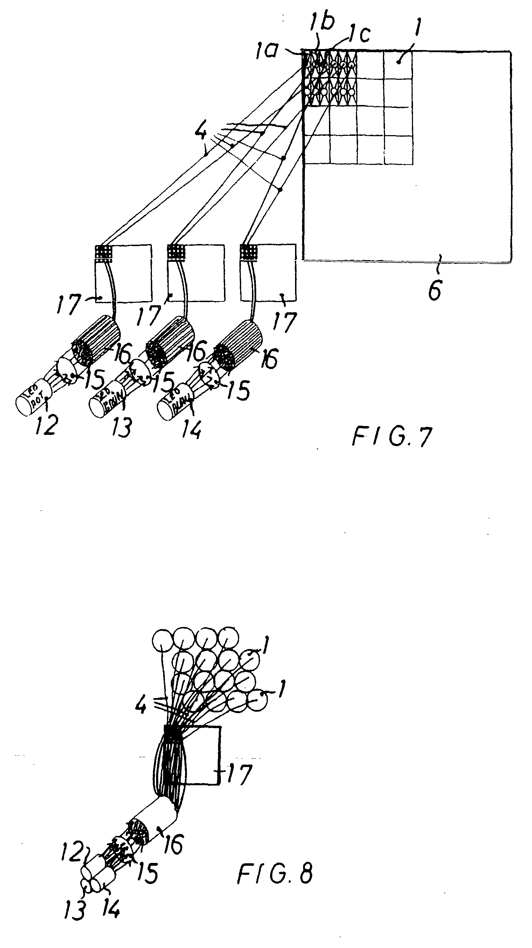

Das Ausführungsbeispiel der Fig. 6 unterscheidet sich vom Ausführungsbeispiel der Fig. 5 dadurch, daß für jede Farbe eine gesonderte Lichtmodulationsanordnung 17 verwendet wird. Dementsprechend benötigt man hier drei Lichtleitfaserbündel 16. Außerdem ist jeder Bildpunkt 1 mit drei Lichtleitfasern 4 verbunden, die jeweils gesondert mit der zu jeder Farbe gehörenden Lichtmodulatorenanordnung 17 verbunden sind, und zwar für jede Farbe extra. Hierdurch ist es möglich, die drei Farben Rot, Grün und Blau parallel anzusteuern, so daß - verglichen mit der Ausbildung gemäß Fig. 5 - eine um den Faktor drei niedrigere Schaltfrequenz erforderlich ist. Allerdings benötigt man bei dieser Ausführungsform dreimal so viele Lichtleitfasern.

Das Ausführungsbeispiel nach Fig. 7 unterscheidet sich vom Ausführungsbeispiel nach Fig. 6 dadurch, daß hier jeder Bildpunkt 1 in Unterbildpunkte 1a, 1b und 1c unterteilt ist, von denen jeder für eine Farbe Rot, Blau oder Grün zuständig ist und die mit der zu dieser Farbe gehörenden Lichtmodulatorenanordnung 17 über Lichtleitfasern 4 verbunden ist.

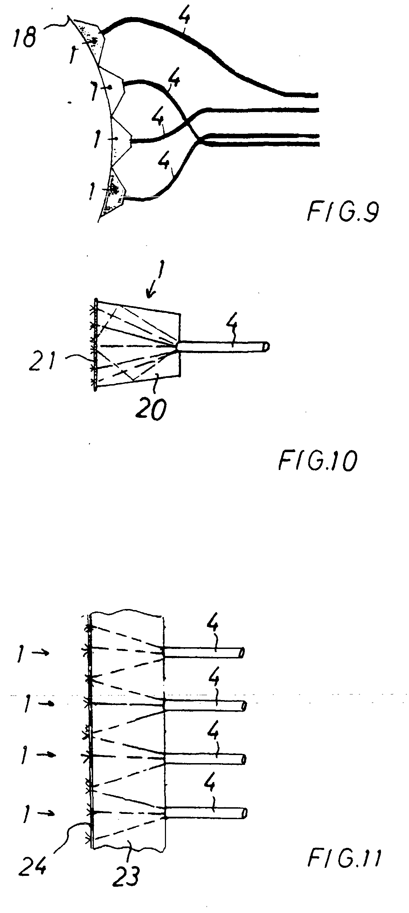

Das Ausführungsbeispiel gemäß Fig. 8 entspricht im Hinblick auf die Lichtversorgung dem Ausführungsbeispiel gemäß Fig. 5. Hier sind jedoch die einzelnen Bildpunkte 1 lose angeordnet und werden von den Endflächen der einzelnen Lichtleitfasern 4 gebildet. Bei diesem Ausführungsbeispiel kann das Format des Anzeigemoduls 6 jederzeit beliebig variiert werden.

Wie aus Fig. 9 ersichtlich ist, können die einzelnen Bildpunkte 1 ggf. auch nebeneinander auf eine optische Folie 18 aufgeklebt werden, die elastisch verformbar ist. Hierdurch ergibt sich eine flexible Betrachtungsfläche des Anzeigemodules 6, die jeder beliebigen Raumform angepaßt werden kann.

Wesentlich ist bei allen Ausführungsformen, daß die Lichtleitfasern 4 und Lichtleitfaserbündel 16 flexibel oder teilflexibel ausgebildet sind, so daß die Bildpunkte 1 bzw. die aus Bildpunkten 1 zusammengesetzten Anzeigemodule 6 und die Modulatoranordnungen 17 bzw. die Halbleiterlichtquellen 12, 13, 14 räumlich voneinander entkoppelt sind.

Wie aus Fig. 10 ersichtlich ist, kann der Bildpunkt 1 ggf. auch aus einem transparenten, pyramidenstumpfförmigen Festkörper 20 bestehen, in den von einer Seite her der Lichtwellenleiter in Form einer Lichtleitfaser 4 einmündet und der auf der anderen Seite mit einer lichtstreuenden Oberfläche 21 versehen ist. Das transparente Material dieses Festkörpers hat einen höheren Brechnungsindex als Luft, so daß an den Seiten Totalreflexion auftritt. Eine Vielzahl von solchen Festkörpern 20 kann mit geeigneten Hilfsmitteln zu einem Anzeigemodul zusammengefaßt werden.

Bei dem in Fig. 11 dargestellten Anzeigemodul befinden sich die einzelnen Bildpunkte 1 auf einer durchgehenden Platte 23 aus transparentem Material. In diese Platte 23 münden von einer Seite her, und zwar für jeden Bildpunkt 1 gesondert, Lichtwellenleiter in Form von Lichtleitfasern 4 ein. Auf der gegenüberliegenden Seite ist die transparente Platte 23 mit einer ebenfalls transparenten, lichtstreuenden Oberfläche 24 versehen, die als Endbetrachtungsfläche dient. Das Anzeigemodul erhält hier seinen Zusammenhalt durch die Platte 23.

Bei allen Ausführungsbeispielen können die flexiblen oder teilflexiblen Lichtwellenleiter 4, 16 nach ihrer Zuordnung und der dreidimensionalen Anordnung ganz oder teilweise in eine aushärtende Masse eingebettet werden.

Hierdurch wird der Flachbildschirm gemäß der Erfindung unempfindlicher gegen mechanische Verletzungen und Erschütterungen.

Abweichend von den dargestellten Ausführungsbeispielen können die Lichtwellenleiter 16 im Bereich zwischen den Halbleiterlichtquellen 12, 13, 14 und den Lichtmodulatorenanordnungen 17 jeweils von einem Festkörper gebildet werden, der eine die Lichtwellenleiter bildende dreidimensionale lichtleitende Struktur aufweist.

## Patentansprüche

1. Flachbildschirm zur Darstellung eines Bildes mittels einer Vielzahl von matrixförmig angeordneten Bildpunkten (1), bei welchem Gruppen von Bildpunkten (1) zu untereinander gleichartigen Anzeigemodulen (6) zusammengefaßt sind, die gemeinsam den Flachbildschirm bilden und jeweils über flexible oder teilflexible Lichtwellenleiter (4,16) mit einer zu jedem Anzeigemodul (6) gehörenden Lichtquelle verbunden sind, wobei in die zu jedem Anzeigemodul (6) führenden Lichtwellenleiter (4, 16) eine Lichtmodulatorenanordnung (17) eingeschaltet ist,
**dadurch gekennzeichnet,**
- daß die an der Vorderseite der Anzeigemodule (6) befindlichen, zusammengefügten Bildpunkte (1) jeweils eine randlose Endbetrachtungsfläche des Anzeigemodules (6) bilden,
- daß die einzelnen Anzeigemodule (6) unmittelbar aneinander angrenzen, so daß sich eine auf der Sichtseite ununterbrochene Endbetrachtungsfläche des Flachbildschirmes ergibt
- und daß die zu jedem Anzeigemodul (6) gehörenden Lichtquellen als Halbleiterlichtquellen (12,13,14) ausgebildet sind, die gepulstes Licht abstrahlen.

2. Flachbildschirm nach Anspruch 1, dadurch gekennzeichnet, daß die Halbleiterlichtquellen (12, 13, 14) für jedes Anzeigemodul (6) mindestens drei LED- oder Diodenlaser in den Farben Rot, Grün und Blau aufweisen.

3. Flachbildschirm nach Anspruch 1, dadurch gekennzeichnet, daß die Modulatorenanordnung (17) jeweils als PLZT-Festkörper-Arrays mit einer Vielzahl von Modulationszellen und einer ITO-Ansteuerung ausgebildet sind.

4. Flachbildschirm nach Anspruch 3, dadurch gekennzeichnet, daß pro Anzeigemodul (6) ein PLZT-Festkörper-Array vorgesehen ist, dessen Modulationszellen die Farben Rot, Grün und Blau zeitlich aufeinanderfolgend modulieren.

5. Flachbildschirm nach Anspruch 3, dadurch gekennzeichnet, daß pro Anzeigemodul (6) drei PLZT-Festkörper-Arrays vorgesehen sind, die die Farben Rot, Grün und Blau zeitlich parallel modulieren.

6. Flachbildschirm nach Anspruch 1, dadurch gekennzeichnet, daß die Anzeigemodule (6) in einem Bildschirmrahmen (10) angeordnet sind, der eine Vielzahl von matrixförmig angeordneten Modulaufnahmen (11) aufweist.

7. Flachbildschirm nach Anspruch 6, dadurch gekennzeichnet, daß die Anzeigemodule (6) in die Modulaufnahmen (11) des Bildschirmrahmens (10) einrastbar sind.

8. Flachbildschirm nach Anspruch 6, dadurch gekennzeichnet, daß die in den Bildschirmrahmen (10) eingesetzten Anzeigemodule (6) miteinander und/oder mit den Modulaufnahmen (11) des Bildschirmrahmens (10) verklebt sind.

9. Flachbildschirm nach Anspruch 1, dadurch gekennzeichnet, daß die einzelnen Bildpunkte (1) von einer optischen Folie (5) abgedeckt sind, von der das Licht in bestimmten Richtungen oder Winkel abgestrahlt wird.

10. Flachbildschirm nach Anspruch 1, dadurch gekennzeichnet, daß eine Vielzahl von Bildpunkten (1) zur Bildung eines Anzeigemoduls nebeneinander auf eine optische Folie (18) aus verformbarem Material aufgeklebt sind.

11. Flachbildschirm nach Anspruch 1, dadurch gekennzeichnet, daß die Bildpunkte (1) des Anzeigemoduls (6) unmittelbar von den Endflächen der beweglichen Lichtwellenleiter (4) gebildet werden.

12. Flachbildschirm nach Anspruch 1, dadurch gekennzeichnet, daß die Bildpunkte (1) jeweils aus transparenten, pyramidenstumpfförmigen Festkörpern (20) bestehen, in die von einer Seite her die Lichtwellenleiter (4) einmünden und die an der gegenüberliegenden Seite mit einer lichtstreuenden Oberfläche (21) versehen sind.

13. Flachbildschirm nach Anspruch 1, dadurch gekennzeichnet, daß die Bildpunkte (1) eines Anzeigemoduls nebeneinander auf einer transparenten Platte (23) angeordnet sind, wobei in dieser Platte (23) von einer Seite her und für jeden Bildpunkt (1) gesondert Lichtwellenleiter (4) einmünden, während die Platte (23) an der gegenüberliegenden Seite mit einer lichtstreuenden Oberfläche (24) versehen ist.

14. Verfahren zur Herstellung eines Flachbildschirmes nach Anspruch 1, dadurch gekennzeichnet, daß die flexiblen oder teilflexiblen Lichtwellenleiter (4, 16) nach ihrer Zuordnung und der dreidimensionalen Anordnung ganz oder teilweise in eine aushärtende Masse eingebettet werden.

15. Flachbildschirm nach Anspruch 1, dadurch gekennzeichnet, daß die Lichtwellenleiter (16) im Bereich zwischen den Halbleiterlichtquellen (12, 13, 14) und den Lichtmodulatorenanordnungen (17) jeweils von einem Festkörper gebildet werden, der eine die Lichtwellenleiter bildende dreidimensionale lichtleitende Struktur aufweist.

## Claims

1. A flat display screen for representing an image by means of a plurality of pixels (1) arranged in matrix form, in which groups of pixels (1) are combined to form display modules (6) which are similar to each other and which jointly form the flat display screen and which are respectively connected by way of flexible or part-flexible optical waveguides (4, 16) to a light source belonging to each display module (6), wherein a light modulator arrangement (17) is connected into the optical waveguides (4, 16) leading to each display module (6), characterised in that
- the combined pixels (1) which are disposed at the front side of the display modules (6) respectively form a rimless end viewing surface of the display module (6),
- the individual display modules (6) directly adjoin each other so as to afford an end viewing surface of the flat display screen, which is uninterrupted on the viewing side, and
- the light sources belonging to each display module (6) are in the form of semiconductor light sources (12, 13, 14) which emit pulsed light.

2. A flat display screen according to claim 1 characterised in that the semiconductor sources (12, 13, 14) for each display module (6) have at least three LED- or diode lasers in the colours red, green and blue.

3. A flat display screen according to claim 1 characterised in that the modulator arrangement (17) are respectively formed as PLZT solid-state arrays with a plurality of modulation cells and an ITO-actuation means.

4. A flat display screen according to claim 3 characterised in that there is provided for each display module (6) a PLZT solid-state array whose modulation cells modulate the colours red, green and blue in time succession.

5. A flat display screen according to claim 3 characterised in that for each display module (6) there are provided three PLZT solid-state arrays which modulate the colours red, green and blue in parallel in respect of time.

6. A flat display screen according to claim 1 characterised in that the display modules (6) are arranged in a display screen frame (10) having a plurality of module mountings (11) arranged in matrix form.

7. A flat display screen according to claim 6 characterised in that the display modules (6) are latchable into the module mountings (11) of the display screen frame (10).

8. A flat display screen according to claim 6 characterised in that the display modules (6) which are fitted into the display screen frame (10) are glued to each other and/or to the module mountings (11) of the display screen frame (10).

9. A flat display screen according to claim 1 characterised in that the individual pixels (1) are covered by an optical foil (5) from which the light is radiated in given directions or angles.

10. A flat display screen according to claim 1 characterised in that a plurality of pixels (1) for forming a display module are glued in mutually juxtaposed relationship on to an optical foil (18) of deformable material.

11. A flat display screen according to claim 1 characterised in that the pixels (1) of the display module (6) are formed directly by the end faces of the movable optical waveguides (4).

12. A flat display screen according to claim 1 characterised in that the pixels (1) respectively comprise transparent frustopyramidal solid-state bodies (20) into which the optical waveguides (4) open from one side and which are provided at the opposite side with a light-diffusing surface (21).

13. A flat display screen according to claim 1 characterised in that the pixels (1) of a display module are arranged in mutually juxtaposed relationship on a transparent plate (23), wherein optical waveguides (4) open in said plate (23) from one side and separately for each pixel (1) while at the opposite side the plate (23) is provided with a light-diffusing surface (24).

14. A process for the production of a flat display screen according to claim 1 characterised in that the flexible or part-flexible optical waveguides (4, 16), after their association and the three-dimensional arrangement thereof, are entirely or partially embedded into a hardening material.

15. A flat display screen according to claim 1 characterised in that in the region between the semiconductor light sources (12, 13, 14) and the light modulator arrangements (17) the optical waveguides (16) are respectively formed by a solid-state body having a three-dimensional light-guiding structure which forms the optical waveguides.

## Revendications

1. Ecran plat pour la représentation d'une image au moyen d'une pluralité d'éléments d'image (1) disposés en forme de matrice, où des groupes d'éléments d'image (1) sont réunis en des modules indicateurs (6) identiques entre eux qui forment ensemble l'écran plat et qui sont reliés chacun par des guides d'ondes lumineuses flexibles ou partiellement flexibles (4,16) à une source de lumière faisant partie de chaque module indicateur (6), où est monté dans les guides d'ondes lumineuses (4, 16) menant à chaque module indicateur (6) un agencement de modulateurs de lumière (17), caractérisé en ce que les éléments d'image réunis (1), se trouvant au côté avant des modules indicateurs (6) constituent respectivement une face de visualisation d'extrémité sans bord du module indicateur (6),
en ce que les modules indicateurs individuels (6) sont directement contigus les uns aux autres de façon à obtenir une face de visualisation d'extrémité ininterrompue côté vision de l'écran plat,
et en ce que les sources de lumière faisant partie de chaque module indicateur (6) sont réalisées comme sources de lumière à semi-conducteur (12, 13, 14) qui diffusent une lumière pulsée.

2. Ecran plat selon la revendication 1, caractérisé en ce que les sources de lumière à semi-conducteur (12, 13, 14) pour chaque module indicateur (6) présentent au moins trois lasers à diode lumineuse ou à diode dans les couleurs rouge, verte et bleue.

3. Ecran plat selon la revendication 1, caractérisé en ce que l'agencement de modulateurs (17) est réalisé à chaque fois comme réseau de corps solide PLZT avec une pluralité de cellules de modulation et une commande ITO.

4. Ecran plat selon la revendication 3, caractérisé en ce qu'il est prévu par module indicateur (6) un réseau de corps solide PLZT dont les cellules de modulation modulent les couleurs, rouge, verte et bleue successivement dans le temps.

5. Ecran plat selon la revendication 3, caractérisé en ce que par module indicateur (6) trois réseaux de corps solide PLZT sont prévus qui modulent les couleurs rouge, verte et bleue parallèlement dans le temps.

6. Ecran plat selon la revendication 1, caractérisé en ce que les modules indicateurs (6) sont disposés dans un cadre d'écran (10) qui présente une pluralité de logements de module (11) disposés en forme de matrice.

7. Ecran plat selon la revendication 6, caractérisé en ce que les modules indicateurs (6) peuvent s'enclencher dans les logements de module (11) du cadre d'écran (10).

8. Ecran plat selon la revendication 6, caractérisé en ce que les modules indicateurs (6) placés dans le cadre d'écran (10) sont collés entre eux et/ou avec les logements de module (11) du cadre d'écran (10).

9. Ecran plat selon la revendication 1, caractérisé en ce que les éléments d'image individuels (1) sont recouverts par une feuille optique (5) d'où la lumière est diffusée dans des directions ou angles déterminés.

10. Ecran plat selon la revendication 1, caractérisé en ce qu'une pluralité d'éléments d'image (1), pour former un module indicateur, sont collés les uns à côtés des autres sur une feuille optique (18) en un matériau déformable.

11. Ecran plat selon la revendication 1, caractérisé en ce que les éléments d'image (1) du module indicateur (6) sont formés directement par les faces d'extrémité des guides d'ondes lumineuses mobiles (4).

12. Ecran plat selon la revendication 1, caractérisé en ce que les éléments d'image (1) sont constitués chacun de corps solides transparents (20) en forme de pyramide tronquée dans lesquels débouchent depuis un côté les guides d'ondes lumineuses (4) et qui sont pourvus au côté opposé d'une surface (21) dispersant la lumière.

13. Ecran plat selon la revendication 1, caractérisé en ce que les éléments d'image (1) d'un module indicateur sont disposés les uns à côté des autres sur une plaque transparente (23), où débouchent dans cette plaque (23), à partir d'un côté et séparément pour chaque élément d'image (1), des guides d'ondes lumineuses (4) tandis que la plaque (23) est pourvue au côté opposé d'une surface (24) dispersant la lumière.

14. Procédé de fabrication d'un écran plat selon la revendication 1, caractérisé en ce que les guides d'ondes lumineuses flexibles ou partiellement flexibles (4, 16) après leur attribution et l'agencement tridimensionnel, sont noyés entièrement ou partiellement dans une masse durcissante.

15. Ecran plat selon la revendication 1, caractérisé en ce que les guides d'ondes lumineuses (16), dans la zone entre les sources de lumière à semi-conducteur (12, 13, 14) et les agencements de modulateurs de lumière (17) sont formés chacun par un corps solide qui a une structure tridimensionnelle, guidant la lumière, formant les guides d'ondes lumineuses.
